# EUROPÄISCHE PATENTSCHRIFT

(11) **EP 2 220 623 B1**
(45) Veröffentlichungstag und Bekanntmachung des Hinweises auf die Patenterteilung: **10.05.2017**
(21) Anmeldenummer: 08858240.8
(22) Anmeldetag: 17.11.2008
(51) Int. Cl.: G07B 15/00, B60R 25/00

(54) **MAUTERFASSUNGSGERÄT FÜR EIN KRAFTFAHRZEUG MIT EINER DIEBSTAHLSICHERUNGSEINRICHTUNG, VERFAHREN ZUM BETREIBEN EINES MAUTERFASSUNGSGERÄTES MIT DIEBSTAHLSICHERUNGSFUNKTION UND COMPUTERPROGRAMMPRODUKT ZUR DURCHFÜHRUNG DES VERFAHRENS**
TOLL-COLLECTION DEVICE FOR A MOTOR VEHICLE WITH AN ANTI-THEFT DEVICE, METHOD FOR OPERATING A TOLL-COLLECTION DEVICE WITH ANTI-THEFT FUNCTION, AND COMPUTER PROGRAM PRODUCT FOR CARRYING OUT SAID METHOD
APPAREIL DE DÉTECTION DE PÉAGE POUR UN VÉHICULE AUTOMOBILE AVEC UN DISPOSITIF ANTIVOL, ET PROCÉDÉ POUR FAIRE FONCTIONNER UN APPAREIL DE DÉTECTION DE PÉAGE À FONCTION ANTIVOL

(30) Priorität: 07.12.2007 DE 102007059123
(43) Veröffentlichungstag der Anmeldung: 25.08.2010
(73) Patentinhaber: Robert Bosch GmbH, 70442 Stuttgart (DE)
(72) Erfinder: MAY, Thomas, 38302 Wolfenbuettel (DE); WALOSSEK, Erik, 31139 Hildesheim (DE); JAKOBLEW, Sascha, 31141 Hildesheim (DE)
(86) Internationale Anmeldenummer: PCT/EP2008/065676
(87) Internationale Veröffentlichungsnummer: WO 2009/071432

(56) Entgegenhaltungen:
- EP-A- 0 894 683
- DE-A1-102004 028 569
- JP-A- 2006 290 189
- JP-A- 2007 248 366
- JP-A- 2008 204 038
- EFKON MOBILITY: "ETC OBU 2nd Generation The Electronic Toll Collection On-Board Unit for GPS and Mobile Communications Based Toll Systems" INTERNET CITATION, 1. Oktober 2005 (2005-10-01), Seiten 1-2, XP007907384 [gefunden am 2009-02-25]
- "Hinweise zur Maut auf deutschen Autobahnen" AKTUELL-MITGLIEDERMAGAZIN DER SVG STRASSENVERKEHRS-GENOSSENSCHAFT SACHSEN UND THÜRINGEN EG, Nr. 2, 30. Juni 2005 (2005-06-30), Seiten 1-8, XP002517313 01097 Dresden (DE)

## Beschreibung

### Stand der Technik

Die vorliegende Erfindung betrifft ein Mauterfassungsgerät für ein Kraftfahrzeug mit einer Diebstahlssicherungseinrichtung und ein Verfahren zum Betreiben eines solchen Mauterfassungsgerätes für ein Kraftfahrzeug.

Eine Diebstahlssicherungseinrichtung für ein Kraftfahrzeug ist beispielsweise aus der Druckschrift DE 197 33 460 C1 bekannt. Die DE 197 33 460 C1 beschreibt dabei eine Diebstahlsicherung eines beweglichen Objektes bestehend aus einer GPS-Einheit, einer Steuereinheit, einer Speichereinheit, einer Alarmeinheit, einer Empfangseinheit und einer Sendeeinheit. Die Sendeeinheit übermittelt die von der GPS-Einheit ermittelte Position des beweglichen Objektes, beispielsweise eines Kraftfahrzeuges, an einen außerhalb des Kraftfahrzeuges befindlichen Leitrechner. Zugleich speichert die Steuereinheit diese Position in einer Speichereinheit. Der Leitrechner vergleicht dann die übermittelte Position des beweglichen Objektes mit einem vorgegebenen Bewegungsraum und übermittelt eine Alarmnachricht an das bewegliche Objekt, wenn das bewegliche Objekt den vorgegebenen Bewegungsraum verlässt oder verlassen hat.

### Offenbarung der Erfindung

Das erfindungsgemäße Mauterfassungsgerät mit den Merkmalen des Anspruchs 1 und das erfindungsgemäße Verfahren zum Betreiben eines Mauterfassungsgerätes mit den Merkmalen des Anspruchs 12 weisen jeweils den Vorteil auf, dass das erfindungsgemäße Alarmsignal innerhalb des Mauterfassungsgerätes und damit innerhalb des Kraftfahrzeuges bereitgestellt wird. Somit müssen - beispielsweise im Gegensatz zur DE 197 33 460 C1 - keine Daten für die Bereitstellung oder Generierung des Alarmsignals an eine Einrichtung oder Vorrichtung außerhalb des Kraftfahrzeuges übertragen werden. Damit verhindert die vorliegende Erfindung vorteilhafterweise die Möglichkeit einer Überwachung der Position des Kraftfahrzeuges durch übertragene Positionsdaten für die Bereitstellung des Alarmsignals.

Die Broschüre der EFKON Mobility "ETC OBU 2nd Generation The Electronic Toll Collection On-Board Unit for GPS and Mobile Communications Based Toll Systems", 1. Oktober 2005 (XP007907384) zeigt ein Mauterfassungsgerät, welches die Position des Fahrzeugs erfasst. Hinweise auf eine Diebstahlerkennung werden nicht dargestellt.

Der Artikel "Hinweise zur Maut auf deutschen Autobahnen", Aktuell-Mitgliedermagazin der SVG Strassenverkehrs-Genossenschaft Sachsen und Thüringen EG, Nr. 2. 30. Juni 2005, Dresden zeigt eine Beschreibung des Toll-Collect-Systems, bei welchem die Möglichkeit besteht, bei Fahrzeugdiebstahl die letzten Streckendaten zur Verfügung zu stellen. Diese Streckendaten werden dabei aus einem Toll-Collect-Server zur Verfügung gestellt.

Die DE 10 2004 028569 A1 beschreibt eine Vorgehensweise nach welchem ein Fahrzeugereignis abhängig in einen Betriebszustand versetzt wird, in dem nach einiger Zeit die Verfügbarkeit über das Fahrzeug eingeschränkt ist. Ein GPS-Signal wird lediglich zur Lokalisierung des Fahrzeugs auf einer Mautstrecke verwendet.

Ein weiterer Vorteil der vorliegenden Erfindung liegt darin, dass das erfindungsgemäße Alarmsignal in Abhängigkeit einer Positionsänderung und nicht in Abhängigkeit einer absoluten Position berechnet wird. Somit muss erfindungsgemäß für die Bereitstellung des Alarmsignals kein vordefinierter Bewegungsraum oder ein vordefinierter Korridor für das Kraftfahrzeug überwacht werden.

Ein weiterer Vorteil der vorliegenden Erfindung liegt darin, dass die Diebstahlssicherungseinrichtung in dem Mauterfassungsgerät oder On-Board-Unit (OBU) integriert ist. Mauterfassungsgeräte oder On-Board-Units sind manipulationssicher, im Markt bereits in einer großen Anzahl verfügbar, zertifiziert und insbesondere von viele Versicherungen und Behörden anerkannt. Durch die Integration der Diebstahlsicherungseinrichtung in dem Mauterfassungsgerät ergeben sich für die Diebstahlsicherungseinrichtung als solche auch nur geringe Mehrkosten.

Ein weiterer Vorteil durch die Integration der Diebstahlsicherungseinrichtung in dem Mauterfassungsgerät ergibt sich durch die Möglichkeit der permanenten Funktionskontrolle der Diebstahlsicherungseinrichtung durch das Mauterfassungsgerät, da viele von der Diebstahlsicherungseinrichtung verwendete Komponenten, beispielsweise die Ortungseinrichtung oder die Übertragungseinrichtung, auch für die Mauterfassung notwendig sind und bei Störung sofort den Fahrer oder Halter signalisiert werden. Ferner ist durch die permanente Aktivität des Mauterfassungsgerätes und damit der integrierten Diebstahlsicherungseinrichtung, insbesondere im Gegensatz zu tragbaren Diebstahlsicherungseinrichtungen, eine versehentliche Inaktivschaltung der Diebstahlsicherungseinrichtung vorteilhafterweise praktisch ausgeschlossen.

Gemäß der vorliegenden Erfindung wird ein Mauterfassungsgerät für ein Kraftfahrzeug vorgeschlagen, die eine Ortungseinrichtung, eine Diebstahlsicherungseinrichtung und eine Übertragungseinrichtung aufweist. Die Ortungseinrichtung ist dazu geeignet, eine globale Position des Kraftfahrzeuges zu bestimmen und abhängig davon eine globale Positions-Information bereitzustellen. Die Diebstahlsicherungseinrichtung weist ein erstes Mittel, ein zweites Mittel und ein drittes Mittel auf. Das erste Mittel ist dazu geeignet, bei einem Aus-Zustand des Kraftfahrzeuges die aktuell bereitgestellte globale Positions-Information als Referenz-Positions-Information bereitzustellen. Das Kraftfahrzeug ist in einem Aus-Zustand, wenn das Kraftfahrzeug abgestellt ist und die Zündung des Kraftfahrzeuges aus ist. Das zweite Mittel ist dazu geeignet, in jeweils vorbestimmbaren Zeitabständen die jeweilige aktuell bereitgestellte globale Positions-Information mit der bereitgestellten Referenz-Positions-Informationen zu vergleichen und abhängig davon eine Positionsänderungs-Information bereitzustellen. Das dritte Mittel ist dazu geeignet, ein Alarmsignal in Abhängigkeit des Aus-Zustandes des Kraftfahrzeuges und der bereitgestellten Positionsänderungs-Information zu generieren. Ferner ist die Übertragungseinrichtung dazu eingerichtet, das generierte Alarmsignal an zumindest eine außerhalb des Kraftfahrzeuges angeordnete Empfangsvorrichtung zu übertragen.

Des Weiteren wird ein Verfahren zum Betreiben eins Mauterfassungsgerätes für ein Kraftfahrzeug vorgeschlagen, das die folgenden Schritte aufweist:
a) Bestimmen einer globalen Position des Kraftfahrzeuges und abhängig davon Bereitstellen einer globalen Positions-Information;
b) Bereitstellen der aktuell bereitgestellten globalen Positions-Information als Referenz-Positions-Information bei Vorliegen eines Aus-Zustandes des Kraftfahrzeuges;
c) Vergleichen der aktuell bereitgestellten globalen Positions-Information mit der bereitgestellten Referenzposition in jeweils vorbestimmbaren Zeitabständen und abhängig davon Bereitstellen einer Positionsänderungs-Information;
d) Generieren eines Alarmsignals in Abhängigkeit des Aus-Zustandes des Kraftfahrzeuges und der bereitgestellten Positionsänderungs-Information; und
e) Übertragen des generierten Alarmsignals an zumindest eine außerhalb des Kraftfahrzeuges angeordnete Empfangsvorrichtung.

In den Unteransprüchen finden sich vorteilhafte Weiterbildungen und Ausgestaltungen des in Anspruch 1 angegebenen Mauterfassungsgerätes und des in Anspruch 12 angegebenen Verfahrens zum Betreiben eines Mauterfassungsgerätes.

### Ausführungsformen der Erfindung

Gemäß einer bevorzugten Ausgestaltung der Erfindung ist die Ortungseinrichtung als ein GPS-Modul ausgebildet. Die Übertragungseinrichtung ist vorzugsweise zumindest als Teil eines Kommunikationsmoduls, insbesondere eines GSM-Kommunikationsmoduls, ausgebildet. Die Empfangsvorrichtung ist beispielsweise einem Sicherunternehmen oder einer Behörde, wie der Zollbehörde, zugeordnet.

Gemäß einer weiteren bevorzugten Ausgestaltung umfasst das Alarmsignal eine aktuelle Position des Kraftfahrzeuges, insbesondere eine Latitude, eine Longitude und/oder eine Altitude. Ferner kann das Alarmsignal auch eine aktuelle Geschwindigkeit des Kraftfahrzeuges und/oder einen aktuellen Richtungswinkel des Kraftfahrzeuges umfassen. Des Weiteren kann das Alarmsignal eine Gerätekennung des Mauterfassungsgerätes, beispielsweise die IMEI des GSM-Kommunikationsmoduls oder die ISID der SIM-Karte des GSM-Kommunikationsmoduls aufweisen.

Gemäß einer weiteren bevorzugten Ausgestaltung generiert das dritte Mittel das Alarmsignal dann, wenn das Kraftfahrzeug in dem Aus-Zustand ist und eine durch die globale Positionsänderungs-Information repräsentierte Positionsänderung des Kraftfahrzeuges größer als ein vorbestimmbarer Schwellwert ist. Der Schwellwert kann beispielsweise 500 Meter betragen.

Gemäß einer weiteren bevorzugten Ausgestaltung wiederholt die Übertragungseinrichtung die Übertragung des Alarmsignals an die zumindest eine Empfangsvorrichtung solange in vorbestimmbaren Zeitabständen, bis die Übertragungseinrichtung von zumindest einer der Empfangsvorrichtungen eine Bestätigungsnachricht zur Bestätigung des Eingangs des Alarmsignals empfängt.

Gemäß einer bevorzugten Weiterbildung der Erfindung weist das Mauterfassungsgerät ein viertes Mittel und ein fünftes Mittel auf. Das vierte Mittel ist dazu geeignet, eine Alarmnachrichtung in Abhängigkeit des von dem dritten Mittel generierten Alarmsignals zu generieren. Die Alarmnachricht ist beispielsweise als eine SMS-Nachricht ausgebildet. Das fünfte Mittel ist dazu eingerichtet, die generierte Alarmnachrichtung oder das generierte Alarmsignal an ein dem Halter des Kraftfahrzeuges zugeordnetes Gerät, zum Beispiel ein Mobilfunkgerät, ein Mobile-Digital-Assistant (MDA) oder ein Computer, zu übertragen.

Gemäß einer weiteren bevorzugten Weiterbildung ist ein sechstes Mittel vorgesehen, welches dazu geeignet ist, das Alarmsignal zu speichern. Das sechste Mittel kann ferner derart ausgestaltet werden, dass das gespeicherte Alarmsignal von einem dem Halter des Kraftfahrzeuges zugeordneten Gerät, insbesondere mittels der Übertragungseinrichtung, auslesbar ist.

Gemäß einer weiteren bevorzugten Ausgestaltung ist das sechste Mittel derart eingerichtet, dass das gespeicherte Alarmsignal nach Übermittlung einer vorbestimmten persönlichen Identifikationsnummer (Personal Identification Number; PIN) auslesbar ist. Vorzugsweise wird dazu ein Mittel zur Überprüfung der persönlichen Identifikationsnummer vorgesehen. Dieses Mittel kann beispielsweise in der Übertragungseinrichtung integriert werden.

Gemäß einer weiteren bevorzugten Weiterbildung weist das Mauterfassungsgerät eine Speichereinrichtung auf, welche dazu geeignet ist, eine vorbestimmte Route und/oder eine vorbestimmte Karte, insbesondere eine Straßenkarte oder eine Seekarte, zu speichern. Dann kann das zweite Mittel dazu eingerichtet werden, die Positionsänderungs-Information in Abhängigkeit der aktuell bereitgestellten globalen Positions-Information, der bereitgestellten Referenz-Positions-Information und der gespeicherten Route und/oder der gespeicherten Karte bereitzustellen. Vorteilhafterweise kann durch das Vorsehen der gespeicherten Route und/oder der gespeicherten Karte eine vom Halter gewollte Bewegung eines abgestellten Kraftfahrzeuges durch einen Reisezug oder eine Fähre erkannt werden und somit das Auslösen eines Alarmes beziehungsweise die Generierung des Alarmsignals unterbunden werden.

Gemäß einer weiteren bevorzugten Weiterbildung ist ein siebtes Mittel vorgesehen, welches dazu geeignet ist, die Diebstahlsicherungseinrichtung durch eine Eingabe einer persönlichen Identifikationsnummer, insbesondere mittels einer Schnittstelleneinrichtung des Mauterfassungsgerätes, insbesondere einer haptischen Schnittstelleneinrichtung oder einer Sprach-Schnittstelleneinrichtung, in einen inaktiven Zustand zu schalten.

Insbesondere kann das Mauterfassungsgerät auch ein achtes Mittel aufweisen, welches dazu eingerichtet ist, die Diebstahlsicherungseinrichtung bei einem Ein-Zustand des Kraftfahrzeuges von einem inaktiven Zustand in einen aktiven Zustand zu schalten. Der Ein-Zustand des Kraftfahrzeuges ergibt sich als invertierter Zustand zum Aus-Zustand des Kraftfahrzeuges. Im aktiven Zustand ist die Diebstahlsicherungseinrichtung betriebsbereit, im inaktiven Zustand ist sie nicht betriebsbereit.

Ferner wird ein Computerprogrammprodukt vorgeschlagen, welches auf einer programmgesteuerten Einrichtung die Durchführung eines wie oben beschriebenen Verfahrens zum Betreiben eines Mauterfassungsgerätes für ein Kraftfahrzeug veranlasst.

### Kurze Beschreibung der Zeichnungen

Ausführungsbeispiele der Erfindung sind in den Zeichnungen dargestellt und in der nachfolgenden Beschreibung näher erläutert. Es zeigen:
- Fig. 1: ein schematisches Blockschaltbild eines ersten Ausführungsbeispiels eines Mauterfassungsgerätes gemäß der vorliegenden Erfindung;
- Fig. 2: ein schematisches Blockschaltbild eines zweiten Ausführungsbeispiels eines Mauterfassungsgerätes gemäß der vorliegenden Erfindung;
- Fig. 3: ein schematisches Ablaufdiagramm eines dritten Ausführungsbeispiels des Mauterfassungsgeräts gemäß der vorliegenden Erfindung;
- Fig. 4: ein schematisches Blockschaltbild eines vierten Ausführungsbeispiels des Mauterfassungsgerätes gemäß der vorliegenden Erfindung;
- Fig. 5: ein schematisches Ablaufdiagramm eines Ausführungsbeispiels des erfindungsgemäßen Verfahrens; und
- Fig. 6: ein schematisches Ausführungsbeispiel einer Anwendung der vorliegenden Erfindung bei einem Diebstahlversuch.

### Beschreibung der Figuren

In den Figuren bezeichnen gleiche Bezugszeichen gleiche oder funktionsgleiche Bestandteile.

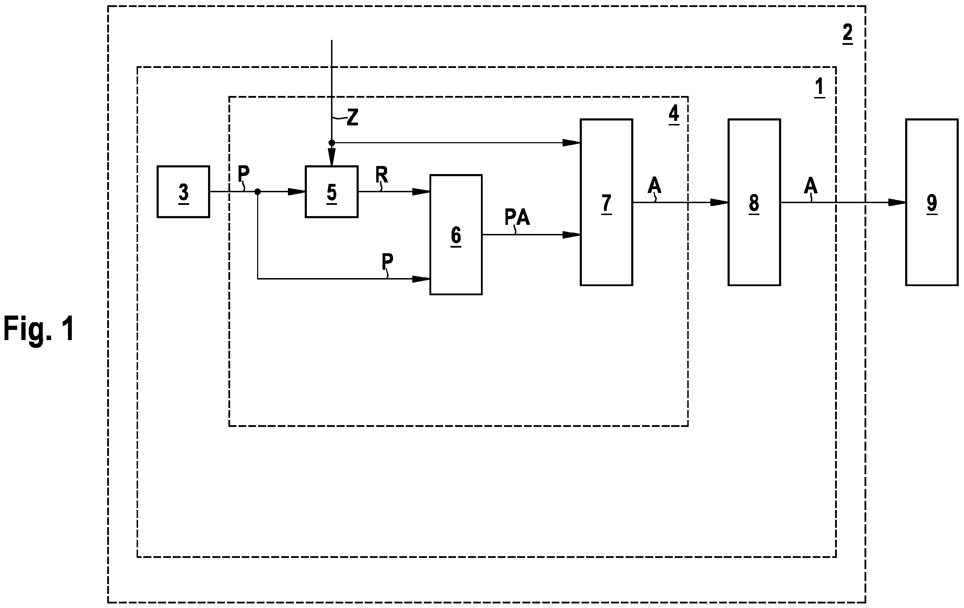

Die vier Ausführungsbeispiele des erfindungsgemäßen Mauterfassungsgerätes 1 nach den Figuren 1 bis 4 haben sämtliche Merkmale des ersten Ausführungsbeispiels des Mauterfassungsgerätes 1 nach Fig. 1 gemeinsam.

Das Mauterfassungsgerät 1 für ein Kraftfahrzeug 2 nach Fig. 1 weist eine Ortungseinrichtung 3, eine Diebstahlsicherungseinrichtung 4 und eine Übertragungseinrichtung 8 auf.

Die Ortungseinrichtung 3 ist dazu eingerichtet, eine globale Position des Kraftfahrzeuges zu bestimmen und abhängig davon eine globale Positions-Information P bereitzustellen. Vorzugsweise ist die Ortungseinrichtung 3 als ein GPS-Modul ausgebildet und empfängt GPS-Daten zur Bereitstellung der globalen Positions-Information P.

Die Diebstahlsicherungseinrichtung 4 weist ein erste Mittel 5, ein zweites Mittel 6 und ein drittes Mittel 7 auf. Das erste Mittel 5 ist dazu eingerichtet, bei einem Aus-Zustand Z des Kraftfahrzeuges 2 die aktuell bereitgestellte globale Positions-Information P als Referenz-Positions-Information R bereitzustellen.

Das zweite Mittel 6 ist dazu eingerichtet, in jeweils vorbestimmbaren Zeitabständen die jeweilige aktuell bereitgestellte globale Positions-Information P mit der bereitgestellten Referenz-Positions-Information R zu vergleichen und abhängig davon eine Positionsänderungs-Information PA bereitzustellen.

Das dritte Mittel 7 ist dazu eingerichtet, ein Alarmsignal A in Abhängigkeit des Aus-Zustandes Z des Kraftfahrzeuges 2 und der bereitgestellten Positionsänderungs-Information PA zu generieren. Vorzugsweise umfasst das Alarmsignal A eine aktuelle Position des Kraftfahrzeuges 2, insbesondere eine Latitude, eine Longitude und/oder eine Altitude, und/oder eine aktuelle Geschwindigkeit des Kraftfahrzeuges 2 und/oder einen aktuellen Richtungswinkel des Kraftfahrzeuges 2 und/oder eine Gerätekennung des Mauterfassungsgerätes 1.

Insbesondere generiert das dritte Mittel 7 das Alarmsignal A dann, wenn das Kraftfahrzeug 2 in dem Aus-Zustand Z ist und eine durch die globale Positionsänderungs-Information P repräsentierte Positionsänderung des Kraftfahrzeuges 2 größer als ein vorbestimmbarer Schwellwert ist.

Die Übertragungseinrichtung 8 ist dazu eingerichtet, das generierte Alarmsignal A an zumindest eine außerhalb des Kraftfahrzeuges 2 angeordnete Empfangsvorrichtung 9 zu übertragen. Die Übertragungseinrichtung 8 ist vorzugsweise zumindest als Teil eines Kommunikationsmoduls ausgebildet, insbesondere eines GSM-Kommunikationsmoduls. Die Empfangsvorrichtung 9 ist beispielsweise einem Sicherheitsunternehmen oder einer Behörde, wie der Zollbehörde zugeordnet.

Die Übertragungseinrichtung 8 wiederholt die Übertragung des Alarmsignals an die zumindest eine Empfangsvorrichtung 9 insbesondere solange in vorbestimmbaren Zeitabständen, bis die Übertragungseinrichtung 8 von zumindest einer der Empfangsvorrichtungen 9 eine Bestätigungsnachricht zur Bestätigung des Eingangs des Alarmsignals A empfangen hat.

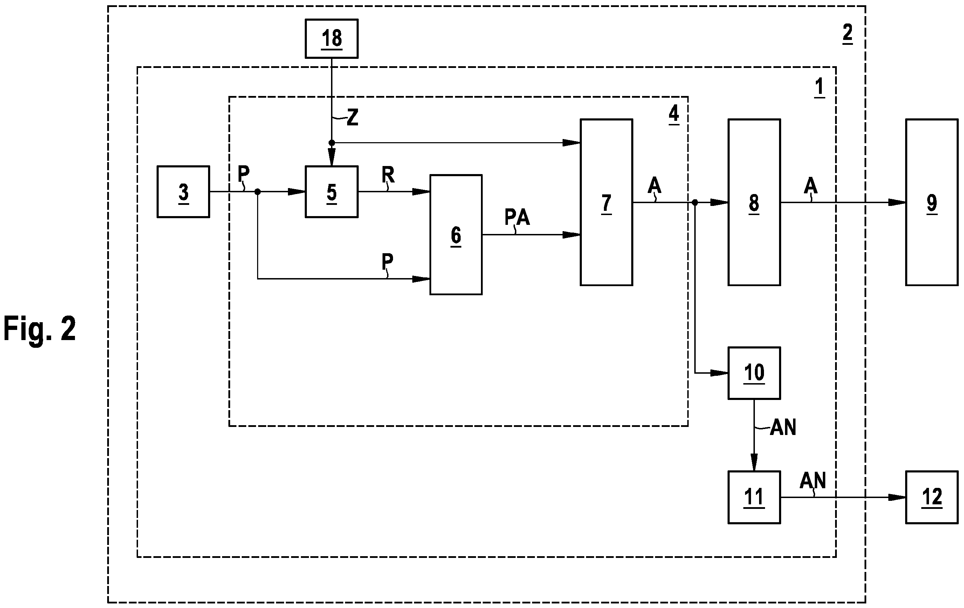

Das zweite Ausführungsbeispiel des Mauterfassungsgerätes 1 nach Fig. 2 unterscheidet sich von dem ersten Ausführungsbeispiel nach Fig. 1 insbesondere dahingehend, dass das Mauterfassungsgerät 1 nach Fig. 2 ein viertes Mittel 10 und ein fünftes Mittel 11 aufweist. Das vierte Mittel 10 ist dazu geeignet, eine Alarmnachricht AN in Abhängigkeit des von den dritten Mittel 7 generierten Alarmsignals A zu generieren. Die Alarmnachricht AN ist beispielsweise als eine SMS-Nachricht ausgebildet. Das fünfe Mittel 11 ist dazu eingerichtet, die generierte Alarmnachricht AN oder das generierte Alarmsignal A an ein dem Halter H des Kraftfahrzeuges 2 zugeordnetes Gerät 12 zu übertragen. Das Gerät 12 des Halters H ist beispielsweise ein Mobilfunkgerät, ein Mobile-Digital-Assistant (MDA) oder ein Computer, wie ein Personalcomputer.

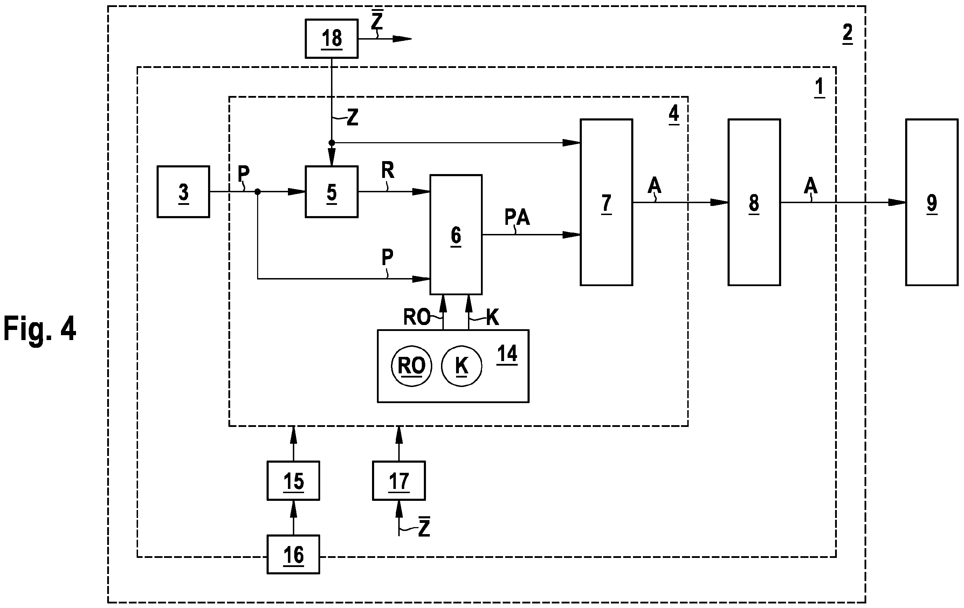

Ferner zeigen die Fig. 2 und 4 ein Detektionsmittel 18, welches dazu geeignet ist, den Aus-Zustand Z dann zu detektieren, wenn das Kraftfahrzeug 2 abgestellt ist und die Zündung des Kraftfahrzeuges 2 ausgeschaltet ist. Der Ein-Zustand Z̅ entspricht dem invertierten Aus-Zustand Z.

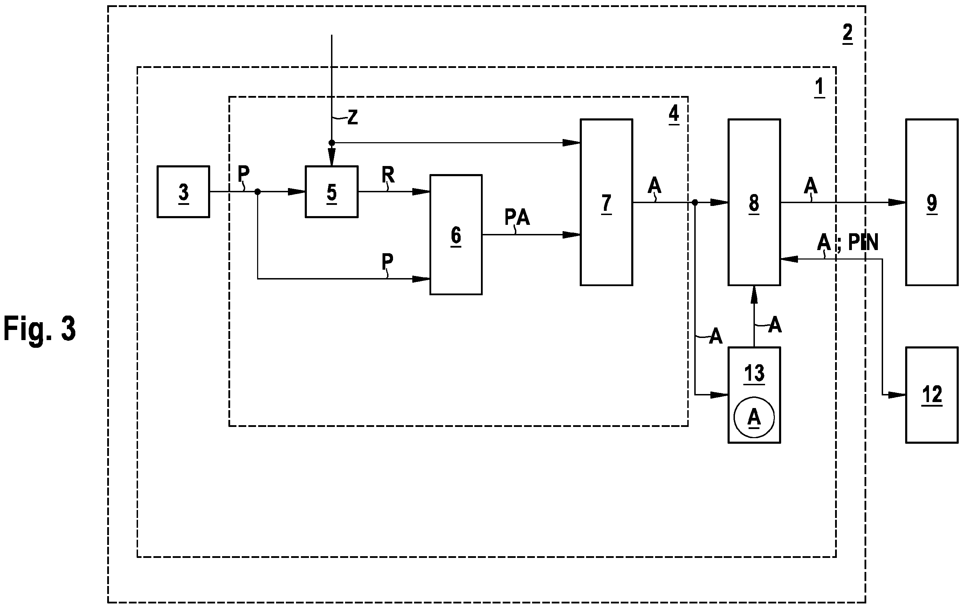

Das dritte Ausführungsbeispiel des erfindungsgemäßen Mauterfassungsgerätes 1 nach Fig. 3 unterscheidet sich von dem ersten Ausführungsbeispiel gemäß Fig. 1 insbesondere dahingehend, dass das Mauterfassungsgerät 1 ein sechstes Mittel 13 aufweist. Das sechste Mittel 13 ist insbesondere dazu eingerichtet, das Alarmsignal A zu speichern, und derart ausgestaltet, dass das gespeicherte Alarmsignal A von einem dem Halter des Kraftfahrzeuges 2 zugeordneten Gerät 12 auslesbar ist. Für das Auslesen des sechsten Mittels 13, welches insbesondere als ein Speichermittel ausgebildet ist, wie ein RAM oder EEPROM wird vorzugsweise die vorgesehene Übertragungseinrichtung 8 verwendet.

Ferner kann das sechste Mittel 6 dazu eingerichtet werden, dass das gespeicherte Alarmsignal A erst nach Übermittlung einer vorbestimmten persönlichen Identifikationsnummer (PIN) auslesbar ist. Dazu wird vorzugsweise ein Mittel (nicht gezeigt) zur Überprüfung der übermittelten persönlichen Identifikationsnummer vorgesehen, welches beispielsweise in der Übertragungseinrichtung 8 integriert werden kann.

Das vierte Ausführungsbeispiel des erfindungsgemäßen Mauterfassungsgerätes 1 nach Fig. 4 unterscheidet sich von dem ersten Ausführungsbeispiel gemäß Fig. 1 insbesondere dahingehend, dass das Mauterfassungsgerät 1 eine Speichereinrichtung 14, ein siebtes Mittel 15 und ein achtes Mittel 17 aufweist.

Die Speichereinrichtung 14 ist insbesondere dazu geeignet, eine vorbestimmte Route RO und/oder eine vorbestimmte Karte K zu speichern. Die vorbestimmte Karte K ist beispielsweise eine Straßenkarte oder eine Seekarte. Dann kann das zweite Mittel 6 dazu eingerichtet werden, die Positionsänderungs-Information PA in Abhängigkeit der aktuell bereitgestellten globalen Positions-Information P, der bereitgestellten Referenz-Positions-Information R und der gespeicherten Route RO und/oder der gespeicherten Karte K bereitzustellen.

Das siebte Mittel 15 ist insbesondere dazu eingerichtet, die Diebstahlsicherungseinrichtung 4 durch Eingabe einer persönlichen Identifikationsnummer (PIN) in einen inaktiven Zustand zu schalten. Durch das siebte Mittel 15 kann also die Diebstahlsicherungseinrichtung 4 abgeschaltet werden, so dass ein herkömmliches Abschleppen des Kraftfahrzeuges 2 keinen Alarm auslöst. Die Eingabe der persönlichen Identifikationsnummer kann beispielsweise über eine Schnittstelleneinrichtung 16 des Mauterfassungsgerätes 1 erfolgen. Die Schnittstelleneinrichtung 16 kann beispielsweise als eine haptische Schnittstelleneinrichtung, insbesondere mit Knöpfen und Tasten, oder als eine Sprach-Schnittstelleneinrichtung ausgestaltet sein.

Das achte Mittel 17 ist insbesondere dazu geeignet, die Diebstahlsicherungseinrichtung 4 bei einem Ein-Zustand Z̅ des Kraftfahrzeuges 2 von dem inaktiven Zustand in einen aktiven Zustand zu schalten.

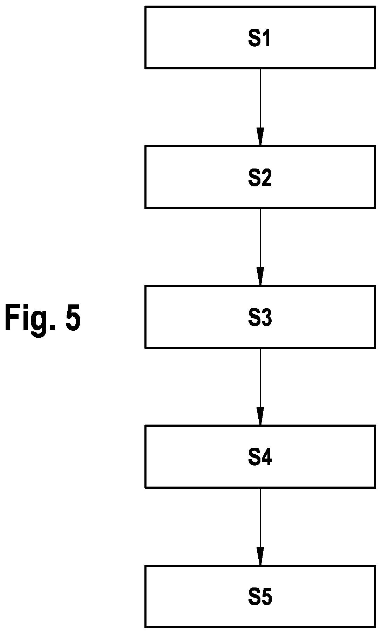

In Fig. 5 ist ein schematisches Ablaufdiagramm eines Ausführungsbeispiels des erfindungsgemäßen Verfahrens zum Betreiben eines Mauterfassungsgerätes 1 für ein Kraftfahrzeug 2 dargestellt.

Nachfolgend wird das erfindungsgemäße Verfahren anhand des Blockschaltbildes in Fig. 5 unter Verweis auf das schematische Blockschaltbild gemäß Fig. 1 beschreieben. Das Ausführungsbeispiel des erfindungsgemäßen Verfahrens gemäß Fig. 5 weist folgende Verfahrensschritte S1 bis S5 auf:

### Verfahrensschritt S1:

Eine globale Position des Kraftfahrzeuges 2 wird bestimmt und abhängig davon wird eine globale Positions-Information P bereitgestellt.

### Verfahrensschritt S2:

Bei Vorliegen eines Aus-Zustandes Z des Kraftfahrzeuges 2 wird die aktuell bereitgestellte globale Positions-Information P als Referenz-Positions-Information R bereitgestellt.

### Verfahrensschritt S3:

Die jeweilige aktuell bereitgestellte globale Positions-Information P wird mit der bereitgestellten Referenzposition R in jeweils vorbestimmbaren Zeitabständen verglichen und abhängig davon wird eine Positionsänderungs-Information PA bereitgestellt.

### Verfahrensschritt S4:

Ein Alarmsignal A wird in Abhängigkeit zumindest des Aus-Zustandes Z des Kraftfahrzeugs 2 und der bereitgestellten Positionsänderungs-Information PA generiert.

### Verfahrensschritt S5:

Das generierte Alarmsignal A wird an zumindest eine außerhalb des Kraftfahrzeuges 2 angeordnete Empfangsvorrichtung 9 insbesondere mittels einer Übertragungseinrichtung 8 übertragen.

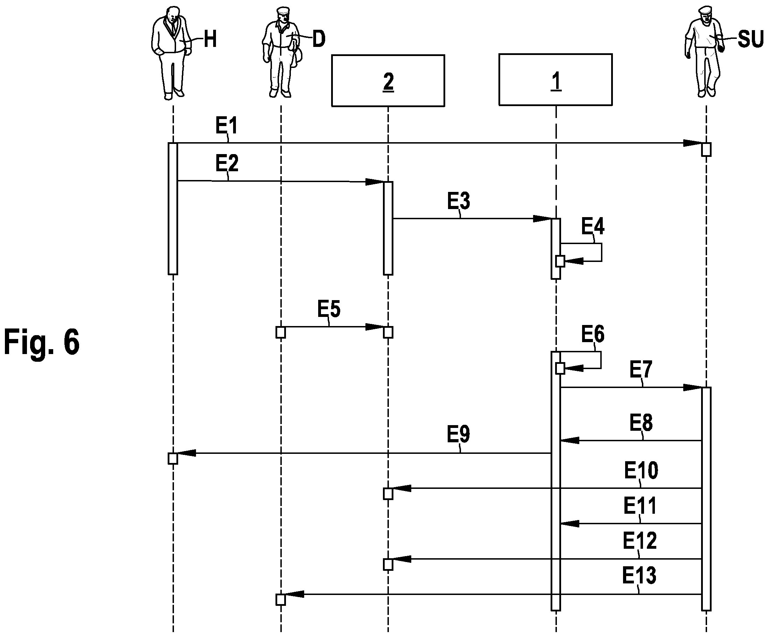

Fig 6 zeigt ein schematisches Ausführungsbeispiel einer Anwendung der vorliegenden Erfindung bei einem exemplarischen Diebstahlversuch. Das Ausführungsbeispiel der erfindungsgemäßen Anwendung gemäß Fig. 6 wird anhand der Ereignisse E1 bis E13 detailliert erläutert, welche zwischen dem Halter H, dem Dieb D, dem Kraftfahrzeug 2, dem Mauterfassungsgerät 1 und dem Sicherheitsunternehmen SU stattfinden.

### Ereignis E1:

Der Fahrer oder Halter H des Kraftfahrzeuges 2 registriert das Mauterfassungsgerät 1 beziehungsweise das Kraftfahrzeug 2 bei dem Sicherheitsunternehmen SU.

### Ereignis E2:

Der Halter H parkt sein Kraftfahrzeug 2.

### Ereignis E3:

Die Diebstahlsicherungseinrichtung 4 des Mauterfassungsgerätes 1 wird insbesondere durch das achte Mittel 17 aktiviert.

### Ereignis E4:

Die globale Position des Mauterfassungsgerätes 1 und damit des Kraftfahrzeuges 2 wird überprüft beziehungsweise bestimmt (siehe Verfahrensschritt S1 nach Fig. 5).

### Ereignis E5:

Der Dieb D entwendet das Kraftfahrzeug 2, beispielsweise schleppt der Dieb D das Kraftfahrzeug 2 ab.

### Ereignis E6:

Die globale Position des Kraftfahrzeuges wird bestimmt und abhängig davon wird die globale Positions-Information P bereitgestellt.

### Ereignis E7:

Ein Alarm A wird gemäß den Verfahrensschritten S1 bis S5 nach Fig. 5 ausgelöst. Insbesondere wird das Alarmsignal A an eine Empfangsvorrichtung 9, welche dem Sicherheitsunternehmen SU zugeordnet ist, übertragen.

### Ereignis E8:

Der Eingang des Alarmsignals A wird von dem Sicherheitsunternehmen SU gegenüber dem Mauterfassungsgerät 1 bestätigt.

### Ereignis E9:

Der Halter H wird mittels einer Alarmnachricht AN, beispielsweise einer SMS-Nachricht, über die Entwendung seines Kraftfahrzeuges 2 benachrichtigt.

### Ereignis E10:

Das Sicherheitsunternehmen SU verfolgt das Kraftfahrzeug 2 mittels des übertragenen Alarmsignals A.

### Ereignis E11:

Das Sicherheitsunternehmen SU überprüft in regelmäßigen Zeitabständen mittels einer Positionsabfrage die globale Position des Kraftfahrzeuges 2.

### Ereignis E12:

Das Kraftfahrzeug 2 wird durch das Sicherheitsunternehmen SU gesichtet.

### Ereignis E13 :

Der Dieb D wird durch das Sicherheitsunternehmen SU gestellt.

Obwohl die vorliegende Erfindung vorstehend anhand der bevorzugten Ausführungsbeispiele beschrieben wurde, ist sie hierauf nicht beschränkt, sondern auf vielfältige Art und Weise modifizierbar.

## Patentansprüche

1. Mauterfassungsgerät (1) für ein Kraftfahrzeug (2) mit:
a.) einer Ortungseinrichtung (3), die eine globale Position des Fahrzeugs bestimmt und abhängig davon eine globale Positionsinformation (P) bereitstellt,
b.) Eine Diebstahlsicherungseinrichtung (4), welche aufweist:
b1) ein erstes Mittel (5), welches bei einem Aus-Zustand (Z) des Kraftfahrzeugs (2) die aktuell bereitgestellte globale Positionsinformation (P) als Referenz-Positions-Information (R) bereitstellt,
b2) ein zweites Mittel (6), welches in jeweils vorbestimmten Zeitabständen die jeweilige aktuell bereitgestellte globale Positions-Information (P) mit der bereitgestellten Referenz Positions-Information (R) vergleicht und abhängig davon eine Positionsänderungsinformation (PA) bereitstellt, und
b3) ein drittes Mittel (7), welches ein Alarmsignal (A) in Abhängigkeit des Aus-Zustandes (Z) des Kraftfahrzeugs (2) und der bereitgestellten Positionsänderungs-Information (PA) generiert, und
c) einer Überwachungseinrichtung (8), welche das generierte Alarmsignal (A) an zumindest eine außerhalb des Kraftfahrzeugs (2) angeordnete Empfangsvorrichtung (9) überträgt,
d) wobei das Alarmsignal (A) innerhalb des Mauterfassungsgeräts (1) bereitgestellt wird.

2. Mauterfassungsgerät nach Anspruch 1,
**dadurch gekennzeichnet,**
**dass** die Ortungseinrichtung (3) als ein GPS-Modul ausgebildet ist und/oder dass die Übertragungseinrichtung (8) zumindest als Teil eines Kommunikationsmoduls, insbesondere eines GSM-Kommunikationsmoduls, ausgebildet ist und/oder die Empfangsvorrichtung (9) einem Sicherheitsunternehmen oder einer Behörde zugeordnet ist.

3. Mauterfassungsgerät nach Anspruch 1 oder 2,
**dadurch gekennzeichnet,**
**dass** das Alarmsignal (A) eine aktuelle Position des Kraftfahrzeuges (2), insbesondere eine Latitude, eine Longitude und/oder eine Altitude, und/oder eine aktuelle Geschwindigkeit des Kraftfahrzeuges (2) und/oder einen aktuellen Richtungswinkel des Kraftfahrzeuges (2) und/oder eine Gerätekennung des Mauterfassungsgerätes (1) umfasst.

4. Mauterfassungsgerät nach Anspruch 1 oder einem der Ansprüche 2 oder 3,
**dadurch gekennzeichnet,**
**dass** das dritte Mittel (7) das Alarmsignal (A) generiert, falls das Kraftfahrzeug (2) in dem Aus-Zustand (Z) ist und eine durch die globale Positionsänderungs-Information (PA) repräsentierte Positionsänderung des Kraftfahrzeuges (2) größer als ein vorbestimmbarer Schwellwert ist.

5. Mauterfassungsgerät nach Anspruch 1 oder einem der Ansprüche 2 bis 4,
**dadurch gekennzeichnet,**
**dass** die Übertragungseinrichtung (8) die Übertragung des Alarmsignals (A) an die zumindest eine Empfangsvorrichtung (9) solange in vorbestimmbaren Zeitabständen wiederholt, bis die Übertragungseinrichtung (8) von zumindest einer der Empfangsvorrichtungen (9) eine Bestätigungsnachricht zur Bestätigung des Eingangs des Alarmsignals (A) empfängt.

6. Mauterfassungsgerät nach Anspruch 1 oder einem der Ansprüche 2 bis 5,
**dadurch gekennzeichnet,**
**dass** ein viertes Mittel (10) und ein fünftes Mittel (11) vorgesehen sind,
wobei das vierte Mittel (10) dazu geeignet ist, eine Alarmnachricht (AN) in Abhängigkeit des von dem dritten Mittel (7) generierten Alarmsignals (A) zu generieren; und/oder
wobei das fünfte Mittel (11) dazu geeignet ist, die generierte Alarmnachricht (AN), zum Beispiel eine SMS-Nachricht, oder das generierte Alarmsignal (A) an ein dem Halter (H) des Kraftfahrzeuges (2) zugeordnetes Gerät (12), zum Beispiel ein Mobilfunkgerät, ein Mobile-Digital-Assistant oder ein Computer, zu übertragen.

7. Mauterfassungsgerät nach Anspruch 1 oder einem der Ansprüche 2 bis 6,
**dadurch gekennzeichnet,**
**dass** ein sechstes Mittel (13) vorgesehen ist, welches dazu geeignet ist, das Alarmsignal (A) zu speichern, und derart ausgestaltet ist, dass das gespeicherte Alarmsignal (A) von einem dem Halter (H) des Kraftfahrzeuges (2) zugeordneten Gerät (12) insbesondere mittels der Übertragungseinrichtung auslesbar ist.

8. Mauterfassungsgerät nach Anspruch 7,
**dadurch gekennzeichnet,**
**dass** das sechste Mittel (6) derart eingerichtet ist, dass das gespeicherte Alarmsignal (A) nach Übermittlung einer vorbestimmten persönlichen Identifikationsnummer auslesbar ist.

9. Mauterfassungsgerät nach Anspruch 1 oder einem der Ansprüche 2 bis 8,
**dadurch gekennzeichnet,**
**dass** eine Speichereinrichtung (14) vorgesehen ist, welche dazu geeignet ist, eine vorbestimmte Route (RO) und/oder eine vorbestimmte Karte (K), insbesondere eine Straßenkarte oder eine Seekarte, zu speichern,
wobei das zweite Mittel (6) dazu eingerichtet ist, die Positionsänderungs-Information (PA) in Abhängigkeit der aktuell bereitgestellten globalen Positions-Information (P), der bereitgestellten Referenz-Positions-Information (R) und der gespeicherten Route (RO) und/oder der gespeicherten Karte (K) bereitzustellen.

10. Mauterfassungsgerät nach Anspruch 1 oder einem der Ansprüche 2 bis 9,
**dadurch gekennzeichnet,**
**dass** ein siebtes Mittel (15) vorgesehen ist, welches dazu geeignet ist, die Diebstahlsicherungseinrichtung (4) durch eine Eingabe einer persönlichen Identifikationsnummer, insbesondere mittels einer Schnittstelleneinrichtung (16) des Mauterfassungsgerätes (1), insbesondere einer haptischen Schnittstelleneinrichtung oder einer Sprach-Schnittstelleneinrichtung, in einen inaktiven Zustand zu schalten.

11. Mauterfassungsgerät nach Anspruch 10,
**dadurch gekennzeichnet,**
**dass** ein achtes Mittel (17) vorgesehen ist, welches dazu geeignet ist, die Diebstahlsicherungseinrichtung (4) bei einem Ein-Zustand (Z̅) des Kraftfahrzeuges (2) von dem inaktiven Zustand in einen aktiven Zustand zu schalten.

12. Verfahren zum Betreiben eines Mauterfassungsgeräts (1) für ein Kraftfahrzeug (2), mit den Schritten:
a) Bestimmen einer globalen Position des Kraftfahrzeugs und abhängig davon Bereitstellen einer globalen Positions-Information (P),
b) Bereitstellen der aktuell bereitgestellten globalen Positions-Information (P) als Referenz-Positions-Information (R) bei Vorliegen eines Aus-Zustandes (Z) des Kraftfahrzeugs (2),
c) Vergleichen der aktuell bereitgestellten globalen Positions-Information (P) mit der bereitgestellten Referenzposition (R) in jeweils vorbestimmten Zeitabständen und abhängig davon Bereitstellen einer Positionsänderungs-Information (PA),
d) Generieren eines Alarmsignals (A) in Abhängigkeit des Aus-Zustandes (Z) des Fahrzeugs (2) und der bereitgestellten Positionsänderungs-Information (PA) wobei das Alarmsignal (A) innerhalb des Mauterfassungsgeräts (1) bereitgestellt wird, und
e) Übertragen des generierten Alarmsignals (A) an zumindest eine außerhalb des Kraftfahrzeugs (2) angeordnete Empfangseinrichtung (9).

13. Computerprogrammprodukt, welches auf einer programmgesteuerten Einrichtung die Durchfuhrung eines Verfahrens nach Anspruch 12 veranlasst.

## Claims

1. Toll collection device (1) for a motor vehicle (2) having:
a) a locating device (3) that determines a global position of the vehicle and takes this as a basis for providing a piece of global position information (P),
b) a theft prevention device (4) that has:
b1) a first means (5) that provides the currently provided global position information (P) as reference position information (R) when the motor vehicle (2) is in an off state (Z),
b2) a second means (6) that compares the respective currently provided global position information (P) with the provided reference position information (R) at respectively predetermined intervals of time and takes this as a basis for providing a piece of change-of-position information (PA), and
b3) a third means (7) that generates an alarm signal (A) on the basis of the off state (Z) of the motor vehicle (2) and the provided change-of-position information (PA), and
c) a monitoring device (8) that transmits the generated alarm signal (A) to at least one reception apparatus (9) arranged outside the motor vehicle (2),
d) wherein the alarm signal (A) is provided inside the toll collection device (1).

2. Toll collection device according to Claim 1,
**characterized**
**in that** the locating device (3) is in the form of a GPS module and/or in that the transmission device (8) is at least in the form of part of a communication module, particularly of a GSM communication module, and/or the reception apparatus (9) is associated with a security company or an authority.

3. Toll collection device according to Claim 1 or 2,
**characterized**
**in that** the alarm signal (A) comprises a current position of the motor vehicle (2), particularly a latitude, a longitude and/or an altitude, and/or a current speed of the motor vehicle (2) and/or a current directional angle of the motor vehicle (2) and/or a device identifier of the toll collection device (1).

4. Toll collection device according to Claim 1 or either of Claims 2 and 3,
**characterized**
**in that** the third means (7) generates the alarm signal (A) if the motor vehicle (2) is in the off state (Z) and a change of position of the motor vehicle (2) represented by the global change-of-position information (PA) is greater than a predeterminable threshold value.

5. Toll collection device according to Claim 1 or one of Claims 2 to 4,
**characterized**
**in that** the transmission device (8) repeats the transmission of the alarm signal (A) to the at least one reception apparatus (9) at predeterminable intervals of time until the transmission device (8) receives from at least one of the reception apparatuses (9) a confirmation message to confirm the arrival of the alarm signal (A).

6. Toll collection device according to Claim 1 or one of Claims 2 to 5,
**characterized**
**in that** a fourth means (10) and a fifth means (11) are provided,
wherein the fourth means (10) is suitable for generating an alarm message (AN) on the basis of the alarm signal (A) generated by the third means (7); and/or
wherein the fifth means (11) is suitable for transmitting the generated alarm message (AN), for example an SMS message, or the generated alarm signal (A) to a device (12) associated with the keeper (H) of the motor vehicle (2), for example a mobile radio, a mobile digital assistant or a computer.

7. Toll collection device according to Claim 1 or one of Claims 2 to 6,
**characterized**
**in that** a sixth means (13) is provided that is suitable for storing the alarm signal (A), and is configured such that the stored alarm signal (A) is readable by a device (12) associated with the keeper (H) of the motor vehicle (2) particularly by means of the transmission device.

8. Toll collection device according to Claim 7,
**characterized**
**in that** the sixth means (6) is set up such that the stored alarm signal (A) is readable after transmission of a predetermined personal identification number.

9. Toll collection device according to Claim 1 or one of Claims 2 to 8,
**characterized**
**in that** a memory device (14) is provided that is suitable for storing a predetermined route (RO) and/or a predetermined map (K), particularly a road map or a nautical chart,
wherein the second means (6) is set up to provide the change-of-position information (PA) on the basis of the currently provided global position information (P), the provided reference position information (R) and the stored route (RO) and/or the stored map (K).

10. Toll collection device according to Claim 1 or one of Claims 2 to 9,
**characterized**
**in that** a seventh means (15) is provided that is suitable for switching the theft prevention device (4) to an inactive state by means of an input of a personal identification number, particularly by means of an interface device (16) of the toll collection device (1), particularly a haptic interface device or a voice interface device.

11. Toll collection device according to Claim 10,
**characterized**
**in that** an eighth means (17) is provided that is suitable for switching the theft prevention device (4) from the inactive state to an active state when the motor vehicle (2) is in an on state (Z̅).

12. Method for operating a toll collection device (1) for a motor vehicle (2), having the steps of:
a) determining a global position of the motor vehicle and taking this as a basis for providing a piece of global position information (P),
b) providing the currently provided global position information (P) as reference position information (R) when the motor vehicle (2) is in an off state (Z),
c) comparing the currently provided global position information (P) with the provided reference position (R) at respectively predetermined intervals of time and taking this as a basis for providing a piece of change-of-position information (PA),
d) generating an alarm signal (A) on the basis of the off state (Z) of the motor vehicle (2) and the provided change-of-position information (PA), wherein the alarm signal (A) is provided inside the toll collection device (1), and
e) transmitting the generated alarm signal (A) to at least one reception device (9) arranged outside the motor vehicle (2).

13. Computer program product that prompts performance of a method according to Claim 12 on a program-controlled device.

## Revendications

1. Appareil de détection de péage (1) destiné à un véhicule automobile (2) comportant :
a.) un dispositif de localisation (3), qui détermine une position globale du véhicule et fournit en fonction de celle-ci une information de position globale (P),
b.) un dispositif antivol (4), qui comporte :
b1) un premier moyen (5) qui fournit l'information de position globale actuelle fournie (P) en tant qu'information de position de référence (R) dans un état désactivé (Z) du véhicule automobile (2),
b2) un deuxième moyen (6) qui compare l'information de position globale actuelle fournie (P) respective à l'information de position de référence fournie (R) à des intervalles de temps respectivement prédéterminés et fournit en fonction de celle-ci une information de modification de position (PA), et
b3) un troisième moyen (7) qui génère un signal d'alarme (A) en fonction de l'état désactivé (Z) du véhicule automobile (2) et de l'information de modification de position fournie (PA), et
c) un dispositif de surveillance (8) qui transmet le signal d'alarme généré (A) à au moins un dispositif de réception (9) disposé à l'extérieur du véhicule automobile (2),
d) dans lequel le signal d'alarme (A) est fourni à l'intérieur de l'appareil de détection de péage (1).

2. Appareil de détection de péage selon la revendication 1,
**caractérisé en ce que** le dispositif de localisation (3) est réalisé sous la forme d'un module GPS et/ou **en ce que** le dispositif de transmission (8) est réalisé au moins sous forme de partie d'un module de communication, notamment d'un module de communication GSM, et/ou **en ce que** le dispositif de réception (9) est associé à une entreprise de sécurité ou à une autorité publique.

3. Appareil de détection de péage selon la revendication 1 ou 2,
**caractérisé en ce que** le signal d'alarme (A) comprend une position actuelle du véhicule automobile (2), notamment une latitude, une longitude et/ou une altitude, et/ou une vitesse actuelle du véhicule automobile (2) et/ou un angle d'orientation actuel du véhicule automobile (2) et/ou un identificateur d'appareil de l'appareil de détection de péage (1).

4. Appareil de détection de péage selon la revendication 1 ou l'une quelconque des revendications 2 ou 3,
**caractérisé en ce que** le troisième moyen (7) génère le signal d'alarme (A) dans le cas où le véhicule automobile (2) est dans l'état désactivé (Z) et où une modification de position du véhicule automobile (2) représentée par l'information de modification de position globale (PA) est supérieure à une valeur de seuil pouvant être prédéterminée.

5. Appareil de détection de péage selon la revendication 1 ou l'une quelconque des revendications 2 à 4,
**caractérisé en ce que** le dispositif de transmission (8) répète la transmission du signal d'alarme (A) à l'au moins un dispositif de réception (9) à des intervalles de temps pouvant être prédéterminés en attendant que le dispositif de transmission (8) reçoive un message de confirmation en provenance d'au moins l'un des dispositifs de réception (9) pour confirmer la fourniture en entrée du signal d'alarme (A).

6. Appareil de détection de pégage selon la revendication 1 ou l'une quelconque des revendications 2 à 5,
**caractérisé en ce qu'**il est prévu un quatrième moyen (10) et un cinquième moyen (11), dans lequel le quatrième moyen (10) est apte à générer un message d'alarme (AN) en fonction du signal d'alarme généré (A) par le troisième moyen (7) ; et/ou
dans lequel le cinquième moyen (11) est apte à transmettre le message d'alarme généré (AN), par exemple un message SMS, ou le signal d'alarme généré (A) sur un appareil (12) associé au propriétaire (H) du véhicule automobile (2), par exemple un appareil radio mobile, un assistant numérique personnel ou un ordinateur.

7. Appareil de détection de péage selon la revendication 1 ou l'une quelconque des revendications 2 à 6,
**caractérisé en ce qu'**il est prévu un sixième moyen (13) qui est apte à stocker le signal d'alarme (A), et est conçu de manière à ce que le signal d'alarme stocké (A) puisse être lu par un appareil (12) associé au propriétaire (H) du véhicule automobile (2), notamment au moyen du dispositif de transmission.

8. Appareil de détection de péage selon la revendication 7,
**caractérisé en ce que** le sixième moyen (6) est conçu de manière à ce que le signal d'alarme stocké (A) puisse être lu après la transmission d'un numéro personnel d'identification prédéterminé.

9. Appareil de détection de péage selon la revendication 1 ou l'une quelconque des revendications 2 à 8,
**caractérisé en ce qu'**il est prévu un dispositif de mémoire (14) qui est apte à stocker un itinéraire prédéterminé (RO) et/ou une carte prédéterminée (K), notamment une carte routière ou une carte nautique, dans lequel le deuxième moyen (6) est conçu pour fournir l'information de modification de position (PA) en fonction de l'information de position globale actuelle fournie (P), de l'information de position de référence fournie (R) et de l'itinéraire stocké (RO) et/ou de la carte stockée (K).

10. Appareil de détection de péage selon la revendication 1 ou l'une quelconque des revendications 2 à 9,
**caractérisé en ce qu'**il est prévu un septième moyen (15) qui est apte à faire passer le dispositif antivol (4) dans un état inactif par fourniture en entrée d'un numéro personnel d'identification, notamment au moyen d'un dispositif d'interface (16) de l'appareil de détection de péage (1), notamment d'un dispositif d'interface haptique ou d'un dispositif d'interface vocale.

11. Appareil de détection de péage selon la revendication 10,
**caractérisé en ce qu'**il est prévu un huitième moyen (17), qui est apte à faire passer le dispositif antivol (4) de l'état inactif à un état actif lors d'un état actif (***Z̅***) du véhicule automobile (2).

12. Procédé de mise en fonctionnement d'un appareil de détection de péage (1) destiné à un véhicule automobile (2), comportant les étapes consistant à :
a) déterminer une position globale du véhicule automobile et fournir en fonction de celle-ci une information de position globale (P),
b) fournir l'information de position globale actuelle fournie (P) en tant qu'information de position de référence (R) lors d'un état désactivé (Z) du véhicule automobile (2),
c) comparer l'information de position globale actuelle fournie (P) à la position de référence fournie (R) à des intervalles de temps respectivement prédéterminés et fournir en fonction de celle-ci une information de modification de position (PA),
d) générer un signal d'alarme (A) en fonction de l'état désactivé (Z) du véhicule (2) et de l'information de modification de position fournie (PA), dans lequel le signal d'alarme (A) est fourni à l'intérieur de l'appareil de détection de péage (1), et
e) transmettre le signal d'alarme généré (A) à au moins un dispositif de réception (9) disposé à l'extérieur du véhicule automobile (2).

13. Produit de programme d'ordinateur, qui ordonne la mise en oeuvre d'un procédé selon la revendication 12 sur un dispositif commandé par programme.
